# FASCICULE DE BREVET EUROPEEN

(11) **EP 1 166 649 B1**
(45) Date de publication et mention de la délivrance du brevet: **06.06.2007**
(21) Numéro de dépôt: 00410067.3
(22) Date de dépôt: 21.06.2000
(51) Int. Cl.: A23L 1/214

(54) **Aliment diététique destiné à l'alimentation humaine à base de manioc de fabrication traditionelle, de légumes ou de fruits**
Diätetisches Nahrungsmittel auf des Basis von durch traditionelle Methoden hergestelltes Maniok mit Gemüse oder Früchten
Dietetic food based on traditionally manufactured manioc and vegetables or fruits

(43) Date de publication de la demande: 02.01.2002
(73) Titulaire: Koyazounda, Antoine, 26120 Montmeyran (FR)
(72) Inventeur: Koyazounda, Antoine, 26120 Montmeyran (FR)
(74) Mandataire: Marchand, André

(56) Documents cités:
- EP-A- 0 667 106
- FR-A- 2 427 064
- FR-A- 2 788 941
- US-A- 4 737 370
- US-A- 4 923 709
- BADRIE, N., AND MELLOWES, W. A.: "Soybean flour/oil and wheat bran effects on characteristics of cassava (Manihot esculenta Crantz) flour extrudate" JOURNAL OF FOOD SCIENCE., vol. 57, no. 1, 1992, pages 108-111, XP002154216 INSTITUTE OF FOOD TECHNOLOGISTS. CHICAGO., US ISSN: 0022-1147
- TIKY MPONDO, G.: "Cassava and soyabean flours and resting time effects on sensory and physical characteristics of reconstituted miondo" JOURNAL OF THE SCIENCE OF FOOD AND AGRICULTURE., vol. 76, 1998, pages 310-314, XP002154217 ELSEVIER APPLIED SCIENCE PUBLISHERS. BARKING., GB ISSN: 0022-5142
- DUTRA DE OLIVEIRA, J. E., SALATA, E. B. Z. M., AND CAMPOS, J.: "Manioc flour as a methionine carrier to balance common bean-based diets" JOURNAL OF FOOD SCIENCE., vol. 38, no. 1, 1973, pages 116-118, XP000972032 INSTITUTE OF FOOD TECHNOLOGISTS. CHICAGO., US ISSN: 0022-1147

## Description

### 1- Introduction:

- Jusqu'à lors de nombreuses procédures ont été mises au point, pour améliorer la transformation alimentaire du manioc dans son usage traditionnel , par exemple en apprêtant le "foufou" traditionnel, aliment de base des africains, de façon industrielle afin de rentabiliser la faisabilité; ou, autre exemple en améliorant le "gari traditionnel", autre modalité de consommation du manioc, afin de tirer meilleure partie des qualités culinaires du manioc.
- Il convient d'abord de rappeler que seul le manioc doux peut être consommé après simple cuisson sans risque de toxicité. Une production à grande échelle suppose l'utilisation du manioc courant, dit amer qui nécessite cuisson et lavages répétés pour une détoxication efficace. De tels traitements sont drastiques pour les nutriments hydrosolubles contenus dans le manioc natif, dont la majeure partie se trouve ainsi éliminée, ne laissant finalement qu'une espèce de tapioca bien connu.

### Il - L'objet de la demande de brevet qui vous est soumis consiste en la conception et la fabrication d'un ALIMENT FONCTIONNEL destiné à faciliter la digestion et le transit intestinal, et à lutter contre la constipation.

Cet objet est défini à la revendication 1 à 4.

II-1) Le manioc seul, utilisé comme base a subi l'opération capitale de rouissage par immersion de cagettes contenant des racines non épluchées pendant quatre à cinq jours dans des bacs contenant de l'eau. Compte-tenu de l'importance de cette opération, nous résumons les phénomènes biochimiques et microbiologiques qui la caractérisent .
- Une fermentation hétérolactique spontanée et complexe sans intervention d'agents surajoutés.
- La microflore est constituée de bactéries fermentaires anaérobies facultatives, parmi lesquelles, après deux jours de fermentation, les bactéries lactiques deviennent majoritaires.
- Le pH de l'eau de rouissage se stabilise après 48 heures autour de 4,5; cette acidification est liée à la production d'acides organiques, principalement le lactate, par les bactéries lactiques;
- La pression en oxygène dissous baisse très rapidement jusqu'à 0,2mg/l permettant le développement d'une microflore anaérobie stricte telle que les clostridies qui produisent du butyrate.
- La microflore fermentaire utilise les oligosaccharides(saccharose, glucose et fructose) de la racine.

Au niveau de la racine non épluchée de manioc, le rouissage se caractérise par trois transformations essentielles:
- Une dégradation des composés cyanés endogènes de la racine, grâce à l'action conjuguée de la fermentation hétérolactique des populations microbiennes et d'enzymes endogènes, essentiellement la linamarase qui a une concentration maximale dans la racine fraîche, et est aussi produite par certaines bactéries pendant le rouissage. Le principal glucoside cyanogénétique des racines, la linamarine est pratiquement totalement dégradé (plus de 90%) après quatre jours d'immersion.
- Pour le transformateur, l'autre intérêt du rouissage réside dans le ramollissement de la racine dû à la lyse de certaines parois cellulaires végétales composées principalement de pectine et de cellulose. La présence d'importantes activités pectinases et l'absence d'activité cellulase indiquent que les premières sont à l'origine de ce ramollissement. Les pectinases détectées sont composées de trois enzymes:
   - la pectineméthylestérase, enzyme déméthoxylante, déjà présente dans la racine non fermentée;
   - la pectate-lyase qui apparaît dès le premier jour du rouissage, atteint son maximum lors du deuxième jour, puis reste constante jusqu'à la fin de la fermentation. On note une bonne corrélation entre la début du phénomène de ramollissement et le maximum d'activité de la pectate-lyase;
   - la polygalacturonase, d'activité plus faible.

Ces trois enzymes, sont comme la linamarase, d'origine végétale et bactérienne donc naturelle, et assurent la dissociation des fibres de cellulose de leur ciment pectique en agissant sur les liaisons osidiques de la pectine.
- Enfin cette fermentation hétérolactique se caractérise par une importante production d'acides organiques, en majorité du lactate ( environ 4,5g/100g de MS soit 50 à 70% des acides produits), de l'acétate et du butyrate ( environ 2g/100g de MS) et de l'éthanol. Ces composés sont produits lors de la dégradation d'oligosaccharides (glucose, saccharose et fructose). On constate une faible concentration de sucres issus de l'hydrolyse de l'amidon tels que le maltose et le maltotriose.
   Le troisième jour du rouissage, on peut mesurer jusqu'à 10₉ bactéries anaérobies. Cette flore est responsable de la production de butyrate, à un moindre degré de propionate, produits des fermentations clostridiennes par excellence et qui participent à l'arôme caractéristique du produit final utilisé dans la fabrication de PROTODIGEST.

Les bactéries lactiques, flore dominante du rouissage, produisent de l'acide lactique, acétique et de l'éthanol qui assurent l'acidification du milieu. La présence de lactate à fortes concentrations expliquent la faible présence de germes pathogènes dans le produit roui.

### Incidence nutritionnelle:

- Au cours du rouissage, la diffusion et l'élimination des nutriments hydrosolubles sont atténuées par le maintien en place de l'écorce autour de la racine.
- La fermentation qui se produit au cours du rouissage induit une importante biosynthèse naturelle de riboflavine qui, calculée par rapport à la racine crue et sur la base de la matière sèche, correspond à un enrichissement de l'ordre de 80% en cette vitamine B2.

### II -2) - La transformation des racines rouies dans leur écorce, en pâte ou en fécule obéit à la même rigueur :

être le moins agressif possible pour conserver au manioc les éléments nutritifs naturellement présents et ce par:
- Épluchage et rinçage doux de surface
- Défibrage, en particulier la partie centrale et des fibres grossières
- Émiettage, toutes opérations exécutées manuellement et qui permettent d'obtenir,
- une Pâte homogène fraîche, qui peut-être utilisée directement pour la fabrication de PROTODIGEST, ou conduire à la transformation en
- une Fécule par:
   - séchage au soleil ou
   - séchage en étuve entre 38° et 40°C maximum. Cette température est représentative de la température diurne moyenne(de bon ensoleillement en Afrique centrale et n'entraîne pas de gélatinisation de l'amidon, et protège la riboflavine qui ainsi n'est pas détruite par les rayons solaires.
   - passage dans un moulin suivi de tamisage.

Les deux sous-produits du manioc, fécule non cuite ou pâte fraîche, sont seuls utilisables et indispensables à la fabrication de PROTODIGEST car non exagérement chargés en fibres et contenant une certaine quantité d'éléments qui, sans être signifiants, n'en sont pas moins intéressants (fer, calcium, phosphore, vitamines B):

| Pâte de manioc: pour 100g de matière sèche | Fécule de manioc: pour 100g |
|---|---|
| Protides(g) 0,84 | 1.23 |
| Lipides(g) 0,3 | 58,48 |
| Glucides(g) 90,9 | 58,48 |
| Fibres 1,9 | 1,82 |
| Calcium(mg) 36 | 33 à 52( au soleil) |
| Phosphore(mg) 58 | 73 |
| Fer(mg) 13 | 15 à 40(au soleil) |
| Thiamine (microg) 62 | 69 |
| Riboflavine(microg) 95 | 29(au soleil) |
| Niacine(mg) 9 | 1,27(au soleil) |

### II -3-DES AUTRES COMPOSANTS DE PROTODIGEST

Leur choix a été dicté par les exigences suivantes:
- N'ajouter aucun produit qui puisse augmenter le pouvoir tampon de l'amidon de manioc, ou introduire une action antitrypsique alors que le manioc n'en a pas. Mais aussi avoir une action bénéfique sur la physiologie intestinale par leurs propriétés naturelles et par l'apport en "fibres douces" en complément de celles du manioc, amidon résistant, dont l'hydrolyse en oligosaccharides arrivant dans le côlon va faciliter le transit colique. C'est dans cet ordre d'idée que la framboise(malgré son coût élevé), le brocoli ( excellent protecteur de la muqueuse colique par ailleurs), le céleri, les pois cassés sont des produits leaders, suivis de la prune, de la pomme et d'autres légumes, tous considérés comme signifiants au plan fonctionnel lorsqu'on les associe au manioc de fabrication traditionnelle.
- Le rendement énergétique , est venu tout naturellement, un peu comme "la cerise sur le gâteau", lorsque la fabrication de PROTODIGEST a été finalisée.
- Autrement dit, "Tout légume n'est pas accepté, tout fruit n'est pas bon".

Le traitement de ces légumes et fruits a obéit aux mêmes exigences, à savoir ne pas ajouter des composés chimiques artificiels, ou leur faire subir des traitements drastiques du type:
- cuisson à ébullition ou à la vapeur ajoût d'enzyme(papaïne), de vitamineC et séchage;
- pelage à la vapeur; cuisson dans l'eau bouillante ou à la vapeur à 100°C pendant 40 minutes; passage dans un presse-purée puis séchage sur cylindre.
- cuisson vapeur à 98°C pendant 30 minutes, broyage, séchage suivis de compactage sous 50 à 120 bars;
- ébullition pendant 10 à 15 minutes à cuisson vapeur, séchage à 50-60°C pendant 90 minutes avant réduction en poudre ;
- "Pâte consistante" faite de pomme de terre, de tapioca cuits à 70°C puis mélangée au manioc et portée à l'autoclave pour "y subir une cuisson sous pression , à 1 bar et demi pendant 1 heure 30 minutes afin de provoquer la gélatinisation de l'amidon contenu dans les produits de base" .

Tout ce qui précède est à l'opposé de notre process de fabrication dans lequel:
- certains fruits et légumes frais, choisis selon leur signification fonctionnelle, sont broyés après pelage et lavage selon les cas.
- Le raffinage consiste à les débarraser des fibres grossières (défibrage dans le manioc), ou de leurs pépins.
- Le manioc non cuit est ensuite ajouté au fruit ou légume frais également non cuits,et l'ensemble est traité, en douceur par un bac mélangeur.
- On obtient une pâte semi-fluide fraîche et onctueuse qui passe dans un bac tampon destiné à entretenir cet état physique, avant leur épanchement continu sur cylindre à 3 sattelites (sans aucun des problèmes de densité, de poids , de précision de granulométrie ou de texture collante), pour être séchée en quelques secondes à 80°C afin d'assurer la pasteurisation du film, seule phase agressive de la fabrication de PROTODIGEST comme le montre le tableau - résumé du process ci-joint.
- Récupération, déchiquetage et réduction en poudre puis conditionnement dans une atmosphère à stérilité contrôlée, sont les phases ultimes de la fabrication de PROTODIGEST, alicament de choix pour faciliter la digestion et le transit intestinal et éviter flatulances, ballonnements postprandiaux et constipation.

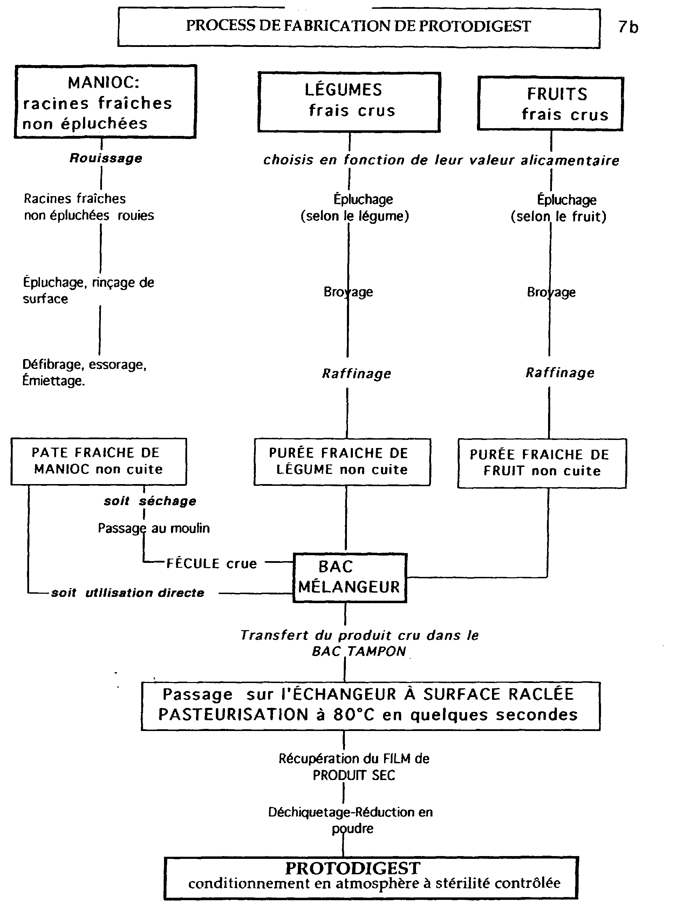

## Revendications

1. Utilisation en tant que produit alimentaire destiné à faciliter la digestion et le transit intestinal, d'un aliment constitué d'un manioc non cuit qui a subi une étape de rouissage conduite en immergeant des racines de manioc non épluchées dans de l'eau, associé à des légumes et/ou à des fruits également non cuits choisis de manière à ne pas augmenter le pouvoir tampon de l'amidon de manioc et ne pas avoir d'action antitrypsique.

2. Utilisation selon la revendication 1, dans laquelle le produit alimentaire contient des légumes et/ou des fruits choisis dans le groupe constitué par la brocoli, le céleri, les pois cassés, la framboise, la prune, la pomme.

3. Procédé de fabrication d'un produit alimentaire destiné à faciliter la digestion et le transit intestinal comprenant une étape de préparation d' un manioc non cuit qui a subi une étape de rouissage conduite en immergeant des racines de manioc non épluchées dans de l'eau, et une étape consistant à ajouter au manioc des légumes et/ou des fruits également non cuits, les légumes et/ou fruits étant choisis de manière à ne pas augmenter le pouvoir tampon de l'amidon de manioc et ne pas avoir d'action antitrypsique.

4. Procédé selon la revendication 3, dans lequel les légumes et/ou fruits sont choisis dans le groupe constitué par le brocoli, le céleri, les pois cassés, la framboise, la prune, la pomme.

## Claims

1. Use as a food product intended to facilitate digestion and intestinal transit of a food consisting of an uncooked cassava which has undergone a step of retting conducted by immersing non-peeled cassava roots in water, combined with vegetables and/or fruit that are also uncooked and chosen so as not to increase the buffering capacity of the cassava starch and not to have any antitrypsic activity.

2. Use according to claim 1, wherein the food product contains vegetables and/or fruit chosen from the group consisting of broccoli, celery, split peas, raspberries, plums and apples.

3. A method for manufacturing a food product intended to facilitate digestion and intestinal transit comprising a step of preparing an uncooked cassava which has undergone a step of retting conducted by immersing non-peeled cassava roots in water, and a step of adding to the cassava vegetables and/or fruit that are also uncooked, the vegetables and/or fruit being chosen so as not to increase the buffering capacity of the cassava starch and not to have any antitrypsic activity.

4. Method according to claim 3, wherein the vegetables and/or fruit are chosen from the group consisting of broccoli, celery, split peas, raspberries, plums and apples.

## Patentansprüche

1. Gebrauch eines Nahrungsmittels, bestehend aus einem ungekochten Maniok, der einem Rotten durch Eintauchen der ungeschälten Maniokwurzeln in Wasser unterworfen wurde, in Verbindung mit ebenfalls ungekochten Gemüsen und/oder Früchten, die derart gewählt wurden, dass sie das Pufferungsvermögen der Maniokstärke nicht erhöhen und keine antitryptische Wirkung haben, als Nahrungsmittel zur Förderung der Verdauung und der Darmtätigkeit.

2. Gebrauch nach Patentanspruch 1, in dem das Nahrungsmittel Gemüse und/oder Früchte enthält, die aus der Gruppe, bestehend aus Broccoli, Sellerie, halbierten Trockenerbsen, Himbeeren, Pflaumen, Äpfeln ausgewählt wurden.

3. Verfahren zur Herstellung eines Nahrungsmittels zur Förderung der Verdauung und der Darmtätigkeit, einen Schritt der Vorbereitung eines ungekochten Manioks, der einem Rotten durch Eintauchen der ungeschälten Maniokwurzeln in Wasser unterworfen wurde, umfasst und einen Schritt des Zusetzens von ebenfalls ungekochten Gemüsen und/oder Früchten zum Maniok, wobei die Gemüse und/oder Früchte derart gewählt wurden, dass sie das Pufferungsvermögen der Maniokstärke nicht erhöhen und keine antitryptische Wirkung haben.

4. Verfahren nach Patentanspruch 3, in dem die Gemüse und/oder Früchte aus der Gruppe, bestehend aus Broccoli, Sellerie, halbierten Trockenerbsen, Himbeeren, Pflaumen, Äpfeln ausgewählt wurden.
